# EUROPÄISCHE PATENTANMELDUNG

(11) **EP 2 532 980 A2**
(43) Veröffentlichungstag der Anmeldung: **12.12.2012**
(21) Anmeldenummer: 12170922.4
(22) Anmeldetag: 06.06.2012
(51) Int. Cl.: F24D 13/02, E04F 15/00

(54) **Entkopplungsschicht**

(30) Priorität: 07.06.2011 DE 102011077110
(71) Anmelder: Jolly, Jürgen, 66578 Schiffweiler (DE)
(72) Erfinder: Jolly, Jürgen, 66578 Schiffweiler (DE)
(74) Vertreter: Bernhardt, Reinhold

(57) **Zusammenfassung**

Die Erfindung betrifft eine Entkopplungsschicht (5) zur Einbettung in Material (4), das einen Oberbelag (2), insbesondere Fliesenbelag (1), mit einem Untergrund (3) verbindet, wobei die Entkopplungsschicht (5) ein zwischen zwei Entkopplungslagen (6,7) angeordnetes Flächenheizelement (8), umfasst. Erfindungsgemäß weist die Entkopplungsschicht (5) ferner wenigstens eine wasserundurchlässige Lage, wenigstens eine Trittschall reduzierende Lage (12) oder/und wenigstens eine Schutzleiterschicht (13) auf.

## Beschreibung

Die Erfindung betrifft eine Entkopplungsschicht zur Einbettung in Material, das einen Oberbelag, insbesondere Fliesenbelag, mit einem Untergrund verbindet, wobei die Entkopplungsschicht ein zwischen zwei Entkopplungslagen angeordnetes Flächenheizelement umfasst.

Eine solche Entkopplungsschicht ist aus der EP 2 071 246 A1 bekannt. Diese Entkopplungsschicht erlaubt einerseits eine kraftschlüssige Verbindung zwischen dem Oberbelag und dem Untergrund, sie ist andererseits aber so flexibel, dass sie Unterschiede in der Wärmeausdehnung von Oberbelag und Untergrund ausgleichen kann. Vorteilhaft kommt dieser bekannten Entkopplungsschicht eine Doppelfunktion zu, indem sie auch als Flächenheizung nutzbar ist.

Der Erfindung liegt die Aufgabe zugrunde, die Anwendungsmöglichkeiten einer solchen, zur Heizung nutzbaren Entkopplungsschicht zu erweitern.

Die diese Aufgabe lösende Entkopplungsschicht nach der Erfindung ist dadurch gekennzeichnet, dass sie ferner wenigstens eine wasserundurchlässige Lage aufweist.

Vorteilhaft ermöglicht die in solcher Weise ausgestaltete Entkopplungsschicht den Einsatz in Bädern oder anderen, bevorzugte Anwendungsbereiche für Fliesenbeläge bildenden Nassräumen.

Zusätzlich oder alternativ kann die erfindungsgemäße Entkopplungsschicht eine Trittschall reduzierende Lage aufweisen, die den Nutzungskomfort weiter erhöht.

In einer Ausführungsform ist zusätzlich oder alternativ zu der wasserundurchlässigen oder/und trittschalldämmenden Lage eine Schutzleiterschicht vorgesehen, die als Sensorschicht für Fehlströme dient und so die Gebrauchssicherheit der Entkopplungsfolie merklich erhöht. Zusätzlich sorgt die Schutzleiterschicht für eine über die Fläche gleichmäßigere Wärmeabgabe.

Die wasserundurchlässige Lage kann mit der dem Oberbelag nahen Entkopplungslage verbunden und mit dieser vorgefertigt sein. Alternativ oder zusätzlich ist diese Entkopplungsschicht durch ihr Material wasserundurchlässig ausgebildet.

In weiterer Ausgestaltung der Erfindung ist die den Trittschall reduzierende Lage mit der dem Oberbelag nahen Entkopplungslage auf deren dem Oberbelag abgewandten Seite verbunden. Alternativ oder zusätzlich kann diese Trittschalldämmlage mit der dem Untergrund nahen Entkopplungslage auf deren dem Untergrund zugewandten Seite verbunden sein.

Die Schutzleiterschicht ist zweckmäßig zwischen dem Flächenheizelement und der dem Oberbelag nahen oder/und dem Untergrund nahen Entkopplungslage angeordnet.

Vorzugsweise ist die Schutzleiterschicht zwischen dem Flächenheizelement und der den Trittschall reduzierenden Lage vorgesehen und zweckmäßig durchgehend aus einer Metallfolie gebildet, insbesondere einer Aluminiumfolie.

Die Erfindung wird nachstehend anhand eines Ausführungsbeispiels und der beiliegenden, sich auf dieses Ausführungsbeispiel beziehenden Zeichnungen weiter erläutert. Es zeigen:
- Fig. 1: einen Fliesenbelag mit einer Entkopplungsschicht nach der Erfindung ausschnittsweise in einem Querschnitt,
- Fig. 2: die Entkopplungsschicht von Fig. 1 ausschnittsweise in einem Querschnitt,
- Fig. 3: einen Ausschnitt aus einem in der Entkopplungsschicht von Fig. 2 verwendeten Flächenheizelement,
- Fig. 4: eine aus Bahnen gebildete Entkopplungsschicht, und
- Fig. 5: ein die Bahnen von Fig. 4 verbindendes Stoßband im Querschnitt.

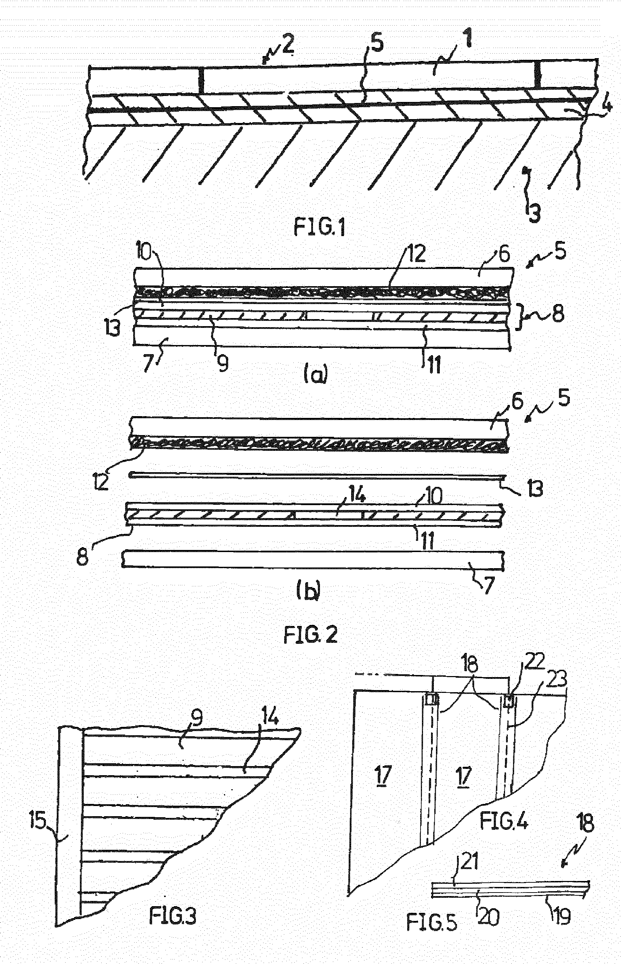

Ein in Fig. 1 ausschnittsweise im Querschnitt gezeigter Bodenbelag weist einen aus Fliesen 1 bestehenden Oberbelag 2 und eine den Oberbelag 2 mit einem Untergrund 3 verbindende Fliesenkleberschicht 4 auf.

In die Fliesenkleberschicht 4 ist eine flexible Entkopplungsschicht 5 eingebettet, welche unterschiedliche Wärmedehnungen des Oberbelags 2 und des Untergrundes 3 ausgleicht.

Die in Fig. 2 ausschnittsweise im Querschnitt dargestellte Entkopplungsschicht 5 weist eine obere Entkopplungslage 6 und eine untere Entkopplungslage 7 auf. Die Entkopplungslagen 6,7 bestehen in dem gezeigten Ausführungsbeispiel aus einem anorganischen Vlies, wobei die obere Entkopplungslage 6 als wasserundurchlässige Lage ausgebildet ist.

Zwischen der oberen Entkopplungslage 6 und der unteren Entkopplungslage 7 ist ein bahnförmiges Flächenheizelement 8 angeordnet. Das Flächenheizelement 8 umfasst parallel zueinander im Abstand verlaufende Heizleiterstreifen 9, deren Dicke in dem gezeigten Ausführungsbeispiel bei 0,3 mm liegt und die aus Kohlefasern bestehen, sowie zwei, die Heizleiterstreifen 9 zwischen sich einschließenden Folien 10 und 11 aus isolierendem Kunststoffmaterial. Die Dicke des Heizelements liegt in dem gezeigten Ausführungsbeispiel bei etwa 0,4 mm.

Die Entkopplungsschicht 5 weist ferner eine flauschige, der Trittschalldämmung dienende Lage 12 auf. Wie die Explosionsdarstellung von Fig. 2b zeigt, ist die Lage 12 mit der Entkopplungslage 6 vorgefertigt, d.h. mit der Entkopplungslage 6 bereits verbunden, wenn letztere zur Herstellung der Entkopplungsschicht 5 mit den übrigen Lagen zusammengefügt wird.

Schließlich umfasst die Entkopplungsschicht 5 auch noch eine zwischen der Lage 12 und dem Flächenheizelement 8 angeordnete Schutzleiterschicht 13, die in dem gezeigten Ausführungsbeispiel aus einer Aluminiumfolie besteht. Die Schutzleiterschicht 13 ist als Sensorschicht an einen Fehlerstromschutzschalter (nicht gezeigt) anschließbar. Neben ihrer Funktion als Schutzleiterschicht dient die Schicht 13 der homogenen Wärmeverteilung und bildet eine Abschirmung gegen elektromechanische Felder.

Die Folien 10 und 11 sind sowohl mit den Heizleiterstreifen 9 als auch mit der dagegen anliegenden Kopplungslage 7 bzw. der Schutzleiterschicht 13 verklebt.

Das Flächenheizelement 8 umfasst ferner zwei im Abstand zueinander angeordnete Leiterschienen aus Kupfer, von denen in Fig. 3 die Leiterschiene 15 sichtbar ist. Die genannten Leiterschienen sind elektrisch mit den zueinander parallel geschalteten Heizleiterstreifen 9 verbunden und wie die Heizleiterstreifen 9 zwischen den genannten Folien 10 und 11 eingeschlossen.

Zwischen den Entkopplungslagen 6,7 und dem Fliesenkleber 4 lässt sich eine Klebeverbindung herstellen, so dass sich die Entkopplungsschicht 5 kraftschlüssig in die Fliesenkleberschicht 4 einfügt.

Vorteilhaft erfüllt die Entkopplungsschicht 5 neben ihrer Entkopplungsfunktion auch eine Heizfunktion. Das flächenhaft ausgedehnte Heizelement 8 gibt verteilt über seine Fläche Wärme ab, so dass auch der Oberbelag 1 weitgehend homogen erwärmt wird, wobei zur gleichmäßigen Wärmeabgabe maßgeblich auch die Schutzleiterschicht 13 beiträgt.

Die Entkopplungslagen 6 und 7 sind einerseits selbst flexibel, um zur Lagenebene parallele Verschiebungen des oben genannten Teils der Fliesenkleberschicht 4 zu deren unterem Teil ausgleichen zu können, andererseits trägt zu diesem Ausgleich eine gewisse Elastizität der über das Flächenheizelement 8 hergestellten Verbindung zwischen der oberen Entkopplungslage und der unteren Entkopplungslage 7 bei.

Die wasserdichte obere Entkopplungslage ermöglicht den Einsatz der Entkopplungsschicht in Bädern oder anderen Nassräumen. Vor allem in Computer- oder Operationsräumen wirkt sich die Trittschalldämmlage 12 und die Schutzleiterschicht 13 vorteilhaft aus.

Abweichend von dem oben beschriebenen Ausführungsbeispiel könnte das bahnförmige, zwischen der oberen Entkopplungslage 6 und der unteren Entkopplungslage 7 angeordnete Heizelement anstelle der flachen elektrischen Heizleiterstreifen 9 und der flachen Leiterschienen 15 aus Kupfer einen Heizdraht aufweisen. Ein solcher Heizdraht ließe sich z.B. auf einer Trägerbahn mäanderförmig derart eng verlegen, dass sich eine über die Bahnfläche annähernd gleichmäßige Wärmeabgabe ergibt. Alternativ könnte das Heizelement wenigstens eine ein flüssiges Heizmedium führende, z.B. mit einer Trägerbahn verbundene Leitung aufweisen. Insbesondere können zwei jeweils einen Heizkreis bildende Leitungen gegenläufig durchströmt werden. Auch diese Leitungen lassen sich im Hinblick auf eine über die Fläche gleichmäßige Wärmeabgabe mäanderförmig eng verlegen. Vorteilhaft könnte durch die wenigstens eine Leitung anstelle eines Heizmediums auch ein Kühlmedium strömen und so das Heizelement als Kühlelement genutzt werden.

Fig. 4 zeigt eine das Heizung verwendbare Entkopplungsschicht, welche aus Bahnen 17 besteht, die wie oben beschrieben aufgebaut sind. Zwischen den zur Verlegung von einer Rolle abgewickelten Bahnen befindet sich jeweils ein den Stoß 23 überdeckendendes Band 18, welches mit den aneinandergrenzenden Bahnen 17 durch eine vorgefertigte Kleberschicht 19 verklebt ist.

Wie Fig. 5 zeigt, weißt das Stoßband 18 neben der Kleberschicht 19 eine Aluminiumfolie 20 sowie eine wasserdichte, alkalibeständige Kunststofffolie 21 an der Oberseite auf. Während die Kunststofffolie für eine Abdichtung der Entkopplungsschicht auch an den Stoßstellen 23 der Bahnen 17 sorgt, bildet die Aluminiumfolie 20 eine Detektionsschicht für einen Fehlerstrom, welcher bei ungewollter Kontaktierung der spannungsführenden Elemente der Entkopplungsschicht für eine Abschaltung der Netzspannung sorgt.

Bei 22 ist eine Kontaktstelle für die Abnahme des Fehlerstroms gebildet, die nachträglich mit einem wasserdichten Anstrich versehen wurde.

Die oben beschriebenen bandförmigen Heizelemente 9 können aus Kunststoff bestehen, in den Kohlenstoff in Form sog. Nanotubes eingebettet ist, also in Form röhrenförmiger, mikroskopisch kleiner Teilchen. Durch ein solches Material lassen sich äußerst flexible Bahnen bilden, die sogar faltbar und knitterfähig sind.

## Patentansprüche

1. Entkopplungsschicht (5) zur Einbettung in Material (4), das einen Oberbelag (2), insbesondere Fliesenbelag, mit einem Untergrund (3) verbindet, wobei die Entkopplungsschicht (5) ein zwischen zwei Entkopplungslagen (6,7) angeordnetes Flächenheizelement (8) umfasst,
**dadurch gekennzeichnet,**
**dass** die Entkopplungsschicht (5) ferner wenigstens eine wasserundurchlässige Lage, wenigstens eine Trittschall reduzierende Lage (12) oder/und wenigstens eine Schutzleiterschicht (13) aufweist.

2. Entkopplungsschicht (5) nach Anspruch 1,
**dadurch gekennzeichnet,**
**dass** die wasserundurchlässige Lage mit der dem Oberbelag (2) nahen Entkopplungslage verbunden oder/und dem Oberbelag (2) nahen Entkopplungslage (6) als wasserundurchlässige Lage ausgebildet ist.

3. Entkopplungsschicht (5) nach Anspruch 1 bis 2,
**dadurch gekennzeichnet,**
**dass** die den Trittschall reduzierende Lage mit der dem Oberbelag nahen Entkopplungslage auf deren dem Oberbelag (2) abgewandten Seite oder/und der dem Untergrund nahen Entkopplungslage auf deren dem Untergrund zugewandten Seite verbunden ist.

4. Entkopplungsschicht (5) nach einem der Ansprüche 1 bis 3,
**dadurch gekennzeichnet,**
**dass** die Schutzleiterschicht (13) zwischen dem Flächenheizelement (8) und der dem Oberbelag (2) nahen oder/und dem Untergrund (3) nahen Entkopplungslage (7) angeordnet ist.

5. Entkopplungsschicht (5) nach Anspruch 4,
**dadurch gekennzeichnet,**
**dass** die Schutzleiterschicht (13) zwischen dem Flächenheizelement (8) und der den Trittschall reduzierenden Lage (12) angeordnet ist.

6. Entkopplungsschicht (5) nach einem der Ansprüche 1 bis 5,
**dadurch gekennzeichnet,**
**dass** die Schutzleiterschicht (13) durchgehend aus einer Metallfolie gebildet ist, insbesondere einer Aluminiumfolie.

7. Entkopplungsschicht nach einem der Ansprüche 1 bis 6,
**dadurch gekennzeichnet,**
**dass** die Entkopplungsschicht aus Bahnen (17) gebildet ist.

8. Entkopplungsschicht nach Anspruch 7,
**dadurch gekennzeichnet,**
**dass** die Bahnen an ihren Stoßstellen (23) durch ein Band (18) verbunden sind.

9. Entkopplungsschicht nach Anspruch 8,
**dadurch gekennzeichnet,**
**dass** das Band (18) eine wasserdichte, insbesondere alkalibeständige Schicht (21) aufweist.

10. Entkopplungsschicht nach einem der Ansprüche 7 bis 9,
**dadurch gekennzeichnet,**
**dass** das Band (18) eine leitfähige Schicht, insbesondere Aluminiumfolie (20), zur Fehlerstromdetektion aufweist.
